# EUROPEAN PATENT APPLICATION

(11) **EP 1 427 238 A1**
(43) Date of publication of application: **09.06.2004**
(21) Application number: 03027417.9
(22) Date of filing: 27.11.2003
(51) Int. Cl.: H04Q 7/38, H04L 29/08, G06F 17/30

(54) **Method and system for creating content-shared calls**

(30) Priority: 05.12.2002 US 310754
(71) Applicant: Nokia Corporation, 02150 Espoo (FI)
(72) Inventor: Forstadius, Antti, 33180 Tampere (FI)
(74) Representative: Becker Kurig Straus

(57) **Abstract**

System, apparatus and method for enabling a content sender and users of mobile terminals, such as mobile phones, to share content during a voice call. An exemplary method includes: receiving, from a content sender, content and an identifier of a mobile terminal; processing the content to make it more suitable for mobile delivery and/or use based on content type and/or terminal type; selecting a user interface for consumption of the processed content by a user of the mobile terminal based on content type and/or mobile terminal type; and downloading the user interface and the processed content to the mobile terminal. The user interface is preferably a Java source code template or pre-complied Java application into which the processed content is embedded to form a standalone Java MIDlet that facilitates downloading and use of the content by a user of the mobile terminal.

## Description

### FIELD OF THE INVENTION

This invention relates to wireless communications systems in general, and more particularly, to methods and systems for creating rich calls.

### BACKGROUND OF THE INVENTION

Today's business environment is increasingly dependent on information sharing as the basis for planning and decision making. Although communication can be solely verbal, it's efficiency increases significantly when other modes of communication, such as visual information, are used concurrently. Visual information can be effectively used to augment verbal information and to improve the clarity and structure of the verbal communication. In the corporate environment, communication is extensively based on augmenting verbal/textual communication with visual information, e.g., in the form of e-mail attachments, printed matter and Powerpoint® presentations. Also, application sharing and workspace sharing (e.g. Microsoft Messenger®, Netmeeting®, Opentext OpenView®, etc.) are widely used in desktop conferencing for sharing material between participants.

Although images, data or other value-added information can be readily shared on computers within the corporate network, this information is not accessible to users who are out of the office or do not have access to their personal computers. Typically, when an employee is away from the office, he can still communicate verbally using his mobile phone, but he can not share any visual information with the calling party, which could otherwise be used to augment the voice call and add value to the conversation. Accessing such material would generally require the user to first connect to the corporate network or mail server with his laptop to retrieve and view the material. This is very impractical, however, since it would require the person to have a personal computer and wireless/wireline access to a data network, and further require him to set up the computer, log into the network and finally find and download the relevant material typically over a low bandwidth connection.

If the user has a mobile terminal such as a "smartphone" or a Communicator-type of device, it can also be used to access additional data over e-mail as normal e-mail attachments. However, downloading e-mail attachments can be time consuming and expensive, since normal application files -- such as Powerpoint files, images, etc. -- are not optimized for mobile delivery and use and can be relatively large, thus resulting in long down-load times. Viewing e-mail attachments also requires that the user's mobile terminal be equipped with suitable viewing applications, which support the received application data type and version.

As can be seen from the foregoing, the present solutions for augmenting voice calls with images, data or other value added information, disadvantageously involve many pre-requisites ― such as having a laptop, modem access or pre-installed viewing applications -- and many phases for setting up a data connection and downloading the information. For these reasons, mobile users unfortunately have had to rely on using voice communication only or, alternatively, have had to go through the extensive and time consuming process of downloading material using a modem and laptop.

### SUMMARY OF THE INVENTION

The above-identified problems are solved and a technical advance is achieved in the art by systems and methods for creating "rich calls", which are voice or video conversations supported by concurrent access to images, data or other value-added information, thus enhancing the communications experience.

An exemplary method for enabling a content sender to share content with users of mobile terminals during a call includes: receiving, from a sending terminal, content and an identifier of a mobile terminal to which the content is to be made available; selecting, based on a type of the content, a user interface to enable consumption of the content; and making the content together with the user interface available to the mobile terminal. In one embodiment, the content and the user interface are made available in the form of standalone Java MIDlet that facilitates use of the content by a user of the mobile terminal.

In an embodiment directed to a method for a mobile terminal to enable sharing of content between a content sender and a user of the mobile terminal during a call, an exemplary method includes: receiving a notification of content that may be downloaded; requesting the content; downloading the content together with a user interface, wherein the user interface has been selected based on a type of the content; and using the downloaded interface to enable a user to consume the content while on a call with the content sender.

In an alternate embodiment, an exemplary method includes: downloading content together with a user interface, wherein the user interface has been selected based on a type of the content; displaying information concerning the content; receiving a request to view the content; and in response to the request, displaying the content.

In an embodiment directed to a mobile collaboration server, an exemplary server comprises a memory device for storing a program; and a processor in communication with the memory device, the processor operative with the program to: maintain a first data base of user interfaces, wherein each user interface is for use on a mobile terminal in consuming content of at least one type; receive content of a first content type from a content sender for delivery to a recipient's mobile terminal; scan the first data base for, and select, a user interface that is for use in consuming content of the first content type; and make the content and the selected user interface available for downloading by the recipient.

Other and further aspects of the present invention will become apparent during the course of the following description and by reference to the attached drawings.

### BRIEF DESCRIPTION OF THE DRAWINGS

FIG. 1 is a block diagram illustrating an exemplary network arrangement in which rich calls are provided in accordance with one embodiment of the present invention.
FIG. 2 is a flowchart illustrating an exemplary process by which a sending terminal enables a rich call to be conducted between a content sender and a user of a mobile terminal in accordance with one embodiment of the present invention.
FIG. 3A is a flowchart illustrating an exemplary process by which a mobile collaboration server (MCS) enables a rich call to be conducted between a content sender and a user of a mobile terminal in accordance with one embodiment of the present invention.
FIG. 3B is a flowchart illustrating an exemplary process by which an MCS enables a rich call to be conducted between a content sender and a user of a mobile terminal in accordance with an alternate embodiment of the present invention.
FIG. 4 is a flowchart illustrating an exemplary process by which a mobile terminal enables a user to conduct a rich call with a content sender in accordance with one embodiment of the present invention.
FIGS. 5A and 5B are exemplary user interfaces of a mobile collaboration client presented to a content sender during the process of generating a mobile collaboration request in accordance with one embodiment of the present invention.
FIG. 6 is a block diagram illustrating an exemplary mobile collaboration server in accordance with one embodiment of the present invention.
FIG. 7 is a block diagram illustrating one example of content and a user interface presented to a recipient of a Java MIDlet in accordance with one embodiment of the present invention.

### DETAILED DESCRIPTION

In the following description of the various embodiments, reference is made to the accompanying drawings which form a part hereof, and in which are shown by way of illustration various embodiments in which the invention may be practiced. It is to be understood that other embodiments may be utilized and structural and functional modifications may be made without departing from the scope of the present invention.

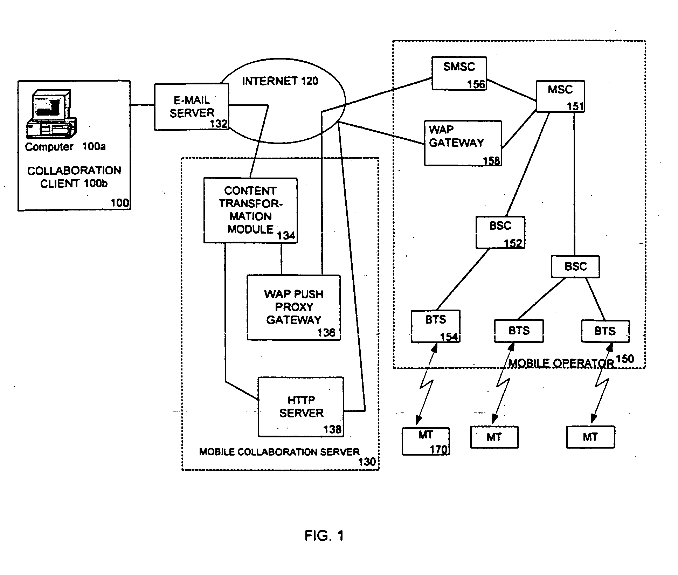

Referring now to the drawings, wherein like reference numerals refer to like parts, FIG. 1 is a block diagram illustrating an exemplary network in which rich calls are provided in accordance with one embodiment of the present invention. In the embodiment shown in FIG. 1, a sending terminal 100, transmits content, such as images, applications or other value-added data, selected by a content sender to a mobile collaboration server (MCS) 130 that handles content conversion and downloading by one or more mobile terminals 170 for use during a voice call with the content sender.

As shown in FIG. 1, sending terminal 100 may include a personal computer 100a, such as an office desktop computer, equipped with a collaboration client 100b or, in other words, software to facilitate the selection and transmission of content to MCS 130 for downloading by mobile terminal 170. The personal computer 100a preferably includes access to a data network, such as the Internet 120, for use in transmitting the content to MCS 130. In one embodiment, personal computer 100a transmits the content by e-mail to an e-mail server 132 that hosts an account for MCS 130, from which MCS 130 may retrieve the content for content conversion and distribution.

In another embodiment (not shown), the collaboration client 100b in personal computer 100a may be continuously connected to MCS 130 via a secure connection such as, for example, a secure Virtual Private Network (VPN) connection. One advantage of such an embodiment is that the session between the client 100b and MCS 130 may be interactive. The server 130 may, for example, provide the content sender with options concerning the content's processing or delivery (e.g., optimize for delivery speed or size; let the content sender view the final processed content before sending to recipients, etc.). The server may also provide feedback to the sender on the size and estimated download times of the final Java MIDlet.

The mobile terminal 170, that will download the content from MCS 130, may be a hand-held wireless telephone, a personal digital assistant ("PDA"), a lap-top computer or the like that includes a wireless voice capability, a wireless data capability (such as GSM data or General Packetized Radio Service) and is Wireless Application Protocol (WAP) enabled and Java 2 Microedition compliant according to one non-limiting embodiment of the present invention. It is to be understood that references made herein to Java and Java 2 Microedition are intended to be exemplary rather than limiting, and the present invention is applicable to other similar programming languages that run on mobile terminals.

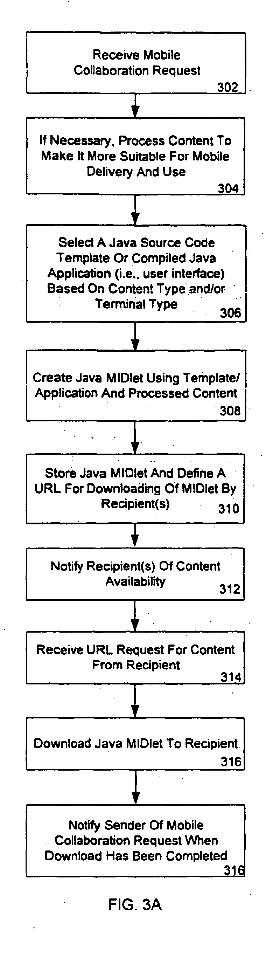

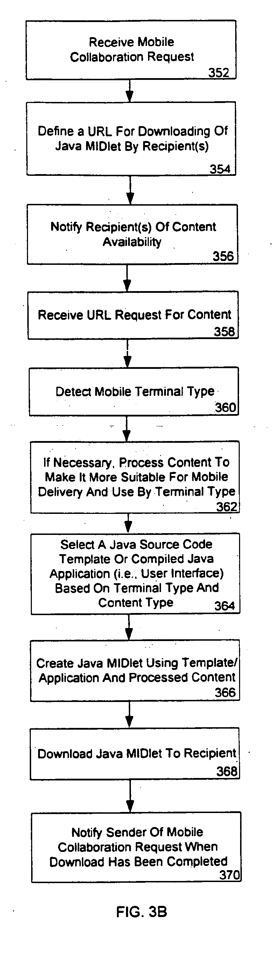

As further shown in FIG. 1, MCS 130 includes a content transformation module 134 for performing a variety of functions in preparing the content for downloading by mobile terminal 170, as will be discussed in detail hereinafter in connection with FIGS. 3A and 3B. Briefly, in one embodiment, these functions include: processing the content to make it more suitable for mobile delivery and use; and embedding the content in a Java source code template or precompiled Java application selected to provide an optimal user interface based on content type and/or terminal type. The template or application together with the embedded content preferably comprise a Java Mobile Information Device Application (MIDlet) that runs on Java 2 Microedition compliant mobile terminals. In one embodiment, once the content transformation module 134 creates the Java MIDlet, it stores the MIDlet in HTTP server 138 of MCS 130 for subsequent downloading by mobile terminal 170. (In an alternate embodiment that will be discussed in detail in connection with FIG. 3B, the Java MIDlet is not created and stored in advance, but instead is dynamically created by MCS 130 upon receiving a request for the content from mobile terminal 170.)

Once the Java MIDlet has been created and stored, MCS 130 then notifies mobile terminal 170 of the content availability using either SMS or WAP Push. To this end, MCS 130 preferably includes a WAP Push Proxy Gateway 136 for notifying mobile terminal 170 of the content via Short Messaging Service Center (SMSC) 156 of mobile operator 150. Notification involves WAP Push Proxy Gateway 136 sending a WAP push message (including a URL for downloading of the content from HTTP server 138) to SMSC 156. SMSC 156, in turn, relays the WAP push message to mobile terminal 170 through the cellular network or, in other words, through the appropriate mobile switching center 151, base station controller 152 and base transmitter station 154 currently serving mobile terminal 170.

It will be appreciated that one or both of the WAP Push Proxy Gateway 136 and HTTP server 138 may be external to MCS 130.

Upon receipt of the WAP push message, mobile terminal 170 may then connect to HTTP server 138 via WAP gateway 158 to request and download the Java MIDlet. Once downloaded, MCS 130 preferably notifies the content sender that the recipient is in possession of the content and that a voice call can be initiated thereto. The user of mobile terminal 170 may then execute the MIDlet and consume the associated content during the voice call with the content sender.

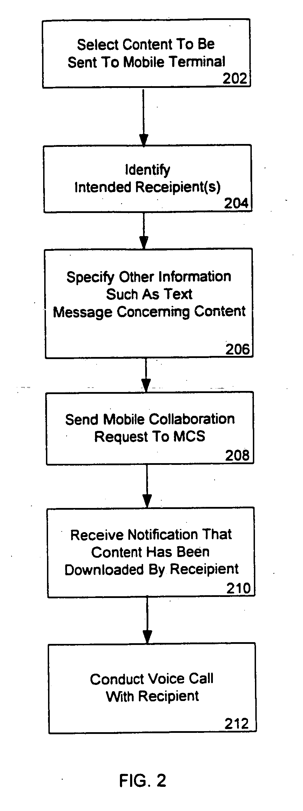

FIG. 2 is a flowchart illustrating an exemplary process by which a sending terminal enables a content sender to conduct a rich call with a user of a mobile terminal in accordance with one embodiment of the present invention.

As shown in FIG. 2, in step 202, a person who would like to share content (i.e., a content sender) with a user of mobile terminal 170 during a voice call, creates or selects the content on his personal computer 100a. The content to be shared may include, but is not intended to be limited to, presentation slides, spreadsheets, clipboard data, images in various graphics formats (e.g., .jpg, .gif, .bmp), screenshots, documents and the like. In step 204, the content sender identifies one or more intended recipients of the content. In this regard, the content sender preferably supplies the mobile phone numbers of the intended recipients. In step 206, the content sender may optionally specify additional information to be transmitted to the user of the mobile terminal 170 such as a text message describing the content sought to be shared during a voice call. Finally, in step 208, personal computer 100a generates and sends a mobile collaboration request to MCS 130. The request includes the content, the intended recipient(s) and may also include any additional information, such as the text message specified by the content sender.

The content sender may perform steps 202-208 on personal computer 100a by inserting the content, recipients and text message directly into an e-mail message for transmission to MCS 130 or into a web interface of MCS 130. Alternatively, these steps may be performed on personal computer 100a using a macro or client-side application, which is referred to herein as a collaboration client 100b. In the event that steps 202-208 of FIG. 2 are performed with the assistance of a collaboration client 100b, an exemplary process may be as follows: While in the application containing the data sought to be shared (e.g. Powerpoint, Excel, etc.), the sender clicks a menu command, which activates the collaboration client 100b. Once activated, client 100b may present the user with a dialog box for selecting content to be sent to MCS 130. Selection may involve browsing folders and selecting files containing the content to be sent. Thereafter, a dialog box may be presented for entry of one or more intended recipients and a text message to the recipient(s) concerning the content. As mentioned above, recipients may be identified by their mobile phone numbers, which may be typed in by the sender or, alternatively, may be selected from the sender's address book or a corporate phone book. Alternatively, the sender may identify the recipient(s) by name and the collaboration client 100b may resolve each name to a phone number. Collaboration client 100b may also provide fields for specifying the confidentiality, urgency, etc. of the collaboration request.

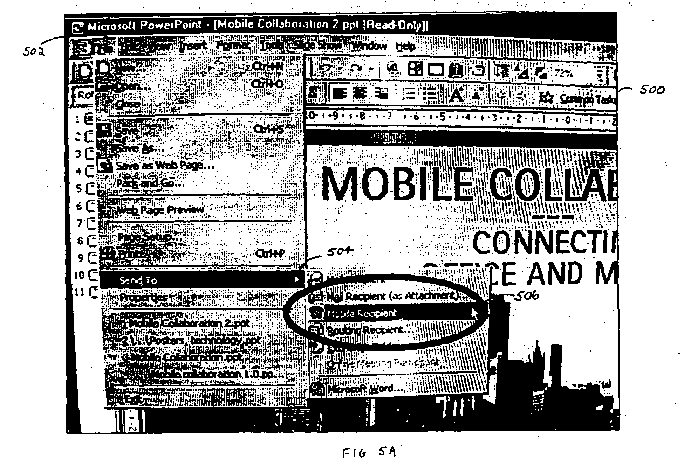

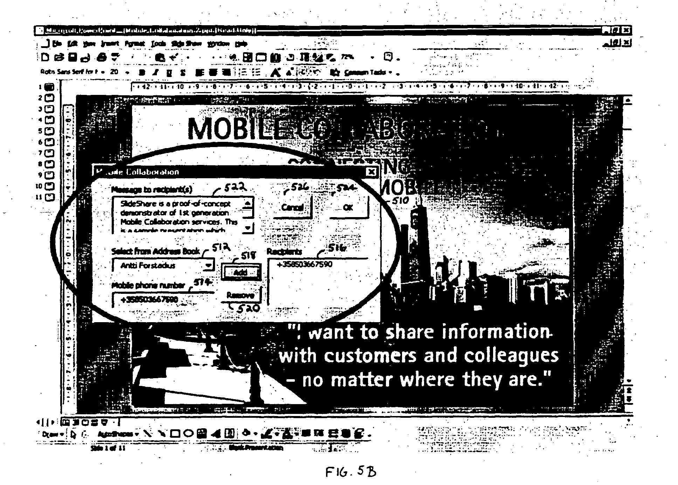

FIGS. 5A and 5B are exemplary user interfaces of a mobile collaboration client presented to a content sender during the process of generating a mobile collaboration request in accordance with one embodiment of the present invention. As shown in screen 500 of FIG. 5A, a content sender has a Microsoft PowerPoint application and a particular PowerPoint file sought to be shared (e.g., Mobile_Collaboration_2.ppt) open on personal computer 100a. The content sender may activate the collaboration client 100b by depressing the "File" task bar button 502 and selecting "Send To" 504 and "Mobile Recipient" 506 from the ensuing drop-down menus. This results in the display of the dialog box 510 shown in FIG. 5B.

Dialog box 510 permits selection of a recipient of the PowerPoint file by name from an address book 512, which results in presentation of the recipient's mobile phone number 514. This mobile phone number may then be added to a recipient list 516 by depressing the "Add" button 518. A recipient may also be deleted from list 516 by highlighting a recipient's mobile phone number in the list 516 and depressing the "Remove" button 520. As further shown in FIG. 5B, dialog box 510 also includes a field in which the content sender may type an optional text message to be sent to the recipient(s) together with the content. After the relevant information has been entered by the content sender, a mobile collaboration request may be sent simply by depressing the "OK" button 524. Client 100b may be deactivated, and any decision to share the content aborted, by depressing the "Cancel" button 526.

In addition to providing mechanisms for content sender input (e.g., content, recipient(s), text message, etc.), collaboration client 100b may also pre-process the content to make it more suitable for mobile delivery and use, in a manner similar to the processing of content performed by MCS 130, as will be discussed in detail hereinafter in connection with FIG. 3A. Upon receiving all necessary information from the sender and performing any preprocessing of the content, collaboration client 100b transmits the mobile collaboration request to MCS 130. The request may be sent to either an e-mail server 132 that hosts an e-mail account for MCS 130 or a web interface of MCS 130. Alternatively, the request may be transmitted to MCS 130 via a dedicated client-server connection using, e.g., e-mail, HTTP, TCP/IP or VPN for data transfer.

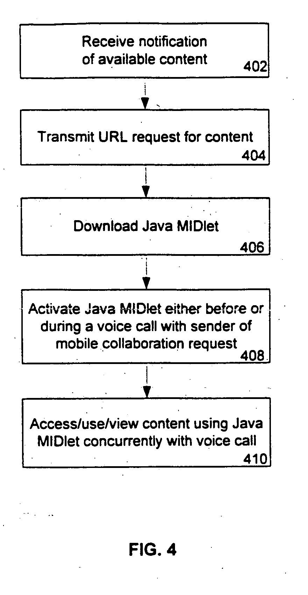

Returning to the process shown in FIG. 2, in step 210, the sending terminal 100 receives a notification from MCS 130 that the recipient has downloaded the content. Notification may include, but is not intended to be limited to, an e-mail message identifying the recipient. Once notified that the download has been completed, the content sender may, in step 212, use the recipient's mobile phone number to place a voice call to the recipient who, after having downloaded the content, may concurrently access it during the call, as will be discussed in detail hereinafter on connection with FIG. 4. In one embodiment, the content sender may use a conference calling feature to call a plurality of the recipients all of whom may then access the content during the call.

FIG. 3A is a flowchart illustrating an exemplary process by which a mobile collaboration server (MCS) enables a rich call to be conducted between a content sender and a user of a mobile terminal in accordance with one embodiment of the present invention.

In step 302, MCS 130 receives a mobile collaboration request from a sending terminal 100 for processing and delivery of content to the recipient(s) identified in the request. In one embodiment, the request is in the form of an e-mail and attachments that are received at an e-mail server 132 that hosts an e-mail account for MCS 130 and thus are retrievable by MCS 130. The request includes the content sought to be shared, the intended recipient(s) of the content and an optional text message from the sender to the recipient(s). The content included in the request may include presentation slides, spreadsheets, clipboard data, images in various graphics formats (e.g., .jpg, .gif, .bmp), screenshots, documents and/or other value-added information.

In step 304, content transformation module 134 of MCS 130 may process the content based on content type (i.e., whether the content comprises images, presentations, documents, spreadsheets, clipboard data, faxes, etc.) and/or mobile terminal type to make it more suitable for mobile delivery and use by mobile terminals in general. Since mobile terminals come in all different shapes and sizes including different display types/sizes, different processing powers and amounts of memory, different user input mechanisms, etc., the content may also be processed to make it more suitable for mobile delivery and use by mobile terminals of the type (e.g., Nokia 7650) used by the intended recipient(s).

In the embodiment of FIG 3A, processing the content for a specific mobile terminal type requires that the terminal type be specified by the content sender in the collaboration request or discernable by MCS 130 from a look-up table or data base (not shown) that resolves the recipient identifier to a terminal type. In an alternate embodiment of the present invention illustrated in FIG. 3B, the terminal types may be obtained from the recipients of the content, as will be discussed in detail hereinafter. In either case, transformation module 134 preferably accesses a look-up table or data base (not shown) of mobile terminal resources (such as display type and size, memory, user input mechanisms, etc.) based on terminal type to assist it in determining how the content should be processed.

In an exemplary embodiment, processing presentation objects such as presentation slides for mobile delivery and use by mobile terminals in general or by mobile terminals of the type used by the intended recipients of the content, may include converting each slide to separate image files with a suitable image format, such as Portable Network Graphics (.png), compressing each file to, e.g., remove detail, decrease color depth, etc., and stripping out background graphics and resizing -- all to achieve an optimal mix of download time and usability given the mobile terminal's resources. Picture objects, such as clipboard data, JPEG or other graphics files may likewise be converted to different image formats, compressed and resized as needed. Moreover, data formats other than image formats may also be used in processing the data. For example, spreadsheet data may be transmitted as data values (e.g., cells with text, numbers, etc.) rather than as images of the original content. As mentioned above, some or all of this processing may be performed by sending terminal 100, rather than, or in addition to, processing performed by content transformation module 134.

Once the content has been processed to make it more suitable for mobile delivery and/or use, then, in step 306, content transformation module 134 selects the optimal user interface for the processed content based on the content type and/or the terminal type. In one embodiment, the optimal user interface for the processed content is a pre-designed Java source code template or a pre-compiled Java application suitable for that content type and/or terminal type. In this embodiment, content transformation module 134 selects the most appropriate template/application from a group of templates/applications, each of which corresponds to a different content type and/or terminal type. A universal template/application for all content and mobile terminal types, rather than individual templates/applications based on content and/or terminal type would be impractical; its large size would take too long for it to be downloaded over-the-air to mobile terminal 170 and would require too much memory in mobile terminal 170 once downloaded.

If the user interface is to be optimized based on content type, then an application/template specific to that content type is selected. For example, if the content type consists of a Powerpoint ™ presentation, then the selected Java application/template would be directed to using PowerPoint slides, and thus, may be one that permits the user to browse thumbnail images of the slides, zoom in to view a slide in greater detail, scroll the slide in a window if the slide is not displayed in its entirety in the window, etc. If the content type is spreadsheet content, then the selected application/template would be quite different as it would be directed to using spreadsheet data. For example, the application/template selected may use the actual data in each cell to create a view of the overall spreadsheet and accept user input to, e.g., jump into a selected cell, generate charts from the data or switch between the spreadsheet charts.

Just as one user interface may not be satisfactory for all types of content, one user interface also may not be optimal for all types of mobile terminals. Thus, if the user interface is to take into account the mobile terminal's resources, then an application/template specific to that terminal type should be selected. For example, if the mobile terminal to which the content will be transmitted has a landscape oriented display, then the application/template should have a landscape, rather than a portrait, presentation mode. Likewise, additional accommodations may be made in an application/template to take into account a mobile terminal type's processing power, memory and user input mechanisms.

If MCS 130 employs pre-compiled Java applications, once an appropriate application has been selected based on content type and/or terminal type then, in step 308, content transformation module 134 links the processed content to the selected application to create a stand-alone Java MIDlet containing both the content and the user interface. In the event that Java source code templates, rather than pre-compiled Java applications are employed, the processed content may be inserted into the selected template and the Java MIDlet compiled subsequently. In either case, the Java MIDlet will be such that download time is reduced and the recipient will be able to consume (e:g., access, view and/or use) the content without having to have any other applications pre-installed on, or separately downloaded to, his or her mobile terminal in order to do so.

In step 310, transformation module 134 stores the Java MIDlet as a jar file in HTTP server 138 and defines a Uniform Resource Locator (URL), which points either directly to the .jar file or to a wireless markup language (WML) page or servlet from which the .jar file may be downloaded by the recipients. In step 312, MCS 130 notifies the intended recipients of the available content and its location in HTTP server 138. MCS 130 may notify the recipients by sending each of them a SMS message or, preferably, a WAP Push message that comprises the short textual message provided by the content sender in the mobile collaboration request together with the URL address assigned by MCS 130. In addition, one or more HTTP parameters may be appended to the URL address (e.g., Http://www.slideshare.com/slides?recipient_id= asdkjj802734rkdsf), wherein the appended recipient_id is a unique identifier of the recipient. WAP Push is preferred over plain text SMS because it enables the recipient to retrieve the content without having to manually key the URL into his browser; instead, the user need only click on the URL link to automatically launch the browser and retrieve the content, as will be discussed in detail hereinafter in connection with FIG. 4. However, it is also possible to deliver the URL address using plain text SMS. In this case, the user may copy the URL from the SMS and enter it to the browser manually. Also, some mobile terminals (e.g., Nokia 7650) are able to find a URL text string from the SMS message and automatically pass it to the browser upon user request. If WAP Push is employed, MCS 130 requests WAP Push Proxy Gateway 136 to send the WAP Push message to each recipient via the Internet 120 and Short Message Service Center (SMSC) 156 of mobile operator 150. SMSC 156 then uses SMS to send the WAP Push message to each intended recipient's mobile terminal 170 via the cellular network.

In step 314, HTTP server 138 of MCS 130 receives, via Internet 120, a URL request for the Java MIDlet from a mobile terminal 170 to whom the WAP Push Message was sent. If the URL points directly to the Java MIDlet, then the downloading of the Java MIDlet begins automatically. If, however, the URL points to a WML page or servlet, the WML page or servlet may use the HTTP parameters appended to the URL to identify the intended recipient and the Java MIDlet sought to be downloaded and, upon verification, cause the URL to dynamically point to the correct Java MIDlet stored in HTTP server 138. Accessing the downloadable Java MIDlet through a servlet can also be used as a security measure against unauthorized downloading. The servlet can be programmed to request a unique authentication passcode before allowing the recipient to download the content. One embodiment for this authentication is accomplished by embedding this unique passcode as a HTTP/WAP parameter in the URL address (e.g., http://collaborationserver.com/downloads?passcode=xvz123abc), which is delivered to the recipient over the air using either WAP Push or SMS. The over-the-air delivery can be assumed secure enough for this purpose, so that only the intended recipient receives the passcode. As the passcode is passed to the servlet directly in the URL request, the recipient does not have to key it in manually, but can still be securely authenticated and uniquely identified. Moreover, this unique authentication also enables MCS 130 to know which recipient has downloaded the content and provide the recipient's identity to the content sender so that a call to the recipient may be initiated.

In step 316, HTTP server 138 of MCS 130 downloads the Java MIDlet to the mobile terminal 170. In step 318, MCS 130 notifies the content sender when the user of mobile terminal 170 has completed downloading the Java MIDlet so that the sender may then initiate a voice call to mobile terminal 170 and, during the call, discuss the downloaded content with the content sender.

FIG. 3B is a flowchart illustrating an exemplary process by which an MCS enables a rich call to be conducted between a content sender and a user of a mobile terminal in accordance with an alternate embodiment of the present invention. As will be discussed in detail hereinafter, in this embodiment, MCS 130 postpones the creation of the Java MIDlet until a recipient identified in a mobile collaboration request tries to access it for downloading. MCS 130 then uses information gathered from the access attempt to determine the terminal type and takes it into consideration both in processing the content and selecting a precompiled Java application or Java source code template. The delay in dynamically generating the Java MIDlet would be in the range of seconds - depending, of course, on MCS 130's capacity and processing power.

Turning to FIG. 3B, in step 352, MCS 130 receives a mobile collaboration request from a sending terminal 100 for processing and delivery of content to the recipient(s) identified in the request. In one embodiment of the present invention, the functionality provided by MCS 130 may be located entirely within the sending terminal 100. The mobile collaboration request further comprises the content sought to be shared and an optional text message from the sender. In step 354, transformation module 134 defines a Uniform Resource Locator (URL), which points to a WML page or servlet in HTTP server 138 from which the yet to be created Java MIDlet may be downloaded by the intended recipient(s). In step 356, MCS 130 notifies the recipient(s) of both the available content and the URL address using either a SMS message or a WAP Push message, as discussed above in connection with step 312 of FIG. 3A.

In step 358, HTTP server 138 of MCS 130 receives a URL request containing a URL that points to the WLM page or servlet in HTTP server 138 that will provide access to the Java MIDlet once it has been created. In step 360, the WML page or servlet detects the mobile terminal type from the URL request. In particular, the URL request preferably includes one or more HTTP parameters, including the mobile terminal's type, originated by the mobile terminal 170's browser.

Once the mobile terminal's type has been detected, the content transformation module 134 of MCS 130 creates a Java MIDlet, as discussed above in detail in connection with steps 304-308 of FIG. 3A. More particularly, in step 362, content transformation module 134 of MCS 130 may process the content to make it more suitable for mobile delivery and use by the detected mobile terminal type. In step 364, content transformation module 134 selects the optimal user interface for the processed content based on the terminal type and/or the content type. Thereafter, in step 366, content transformation module creates a Java MIDlet using the selected user interface and processed content.

Once the Java MIDlet has been created then, in step 368, the servlet downloads the MIDlet to the mobile terminal that transmitted the URL request to HTTP server 138. Lastly, in step 370, MCS 130 notifies the content sender when the recipient has finished downloading the Java MIDlet so that the sender may then initiate a voice call to the mobile terminal 170 to discuss the content.

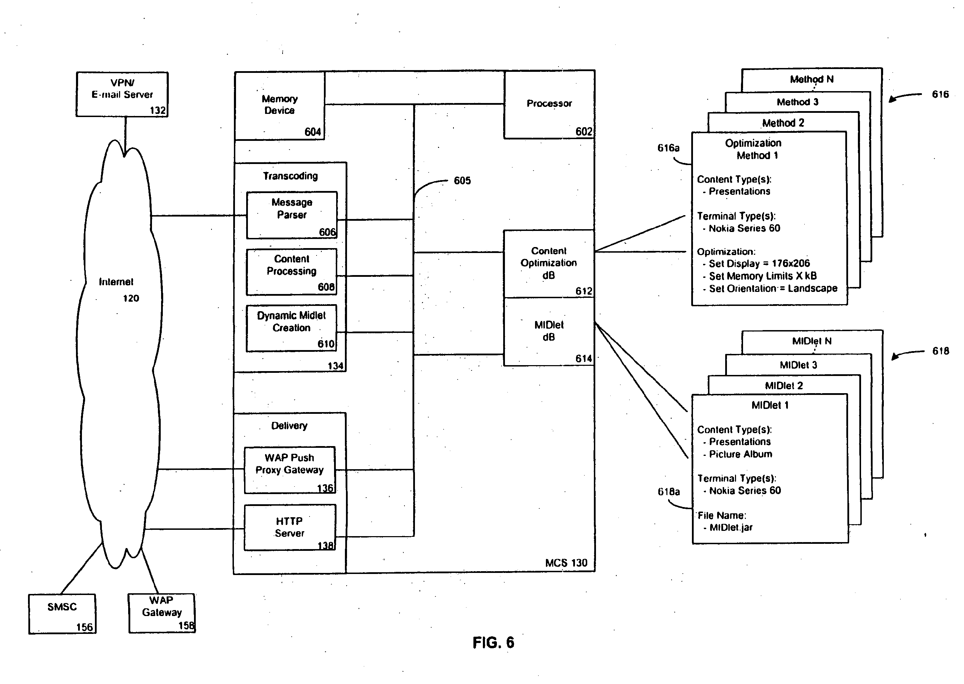

FIG. 6 is a block diagram illustrating a mobile collaboration server 130 in accordance with one embodiment of the present invention. As shown in FIG. 6, MCS 130 comprises a processor 602 and memory 604 interconnected to various system components by a system bus 605. These system components include a transcoding module 134 for use in creating a Java MIDlet in accordance with one embodiment of the present invention. Transcoding module 134 comprises a message parser 604 for receiving mobile collaboration requests including the content sought to be shared from, e.g., an e-mail server 132, a content processing module 608 for optimizing the received content based on content type and/or terminal type and a dynamic MIDlet creation module 610 for selecting an appropriate user interface based also on content type and/or terminal type.

As further shown in FIG. 6, MCS 130 also comprises a content optimization data base 612, which stores a plurality of optimization methods 616, for use by content processing module 608 in optimizing content for mobile delivery and use. As illustrated by optimization method 616a, an optimization method may be linked to at least one content type and one terminal type - in the example shown in FIG. 6, "Presentations" and "Nokia Series 60" mobile phones, respectively. In one embodiment, the content type is the decisive factor in selecting an optimization method. If a plurality of methods are stored for a single content type, then the terminal type may be used to select the better or best of the plurality of optimization methods for that content type.

MCS 130 further comprises a MIDlet database 614, which stores a plurality of Jave source code templates or pre-compiled Java applications 618 for use by dynamic MIDlet creation module 610 in selecting an appropriate user interface based on content type and/or terminal type. As in the case of content optimization, the content type in one embodiment of MCS 130 is the decisive factor in selecting the template/application and terminal type is only considered in the event that there are a plurality of templates/applications stored for that content type. As illustrated by MIDlet 618a, a record in database 614 may include the content type(s) and terminal(s) for which the template/application is best suited and the filename of the template/application (e.g., MIDlet_1.jar).

Once the appropriate template/application has been selected, MIDlet creation module 610 links the template/application with the optimized content to create a standalone Java MIDlet comprising the user interface and the processed content. The Java MIDlet is then made available for downloading by the recipient(s) via HTTP server 138. As further shown in FIG. 6, MCS 130 also includes a WAP Push Proxy Gateway 136 for use in notifying recipient(s) of the availability of a Java MIDlet for downloading. It is to be understood that in other embodiments one or both of the content optimization data base 612 and the MIDlet data base 614 may be located remotely from, yet be accessible by, MCS 130.

FIG. 4 is a flowchart illustrating an exemplary process by which a mobile terminal enables its user to conduct a rich call with a content sender in accordance with one embodiment of the present invention.

In step 402, mobile terminal 170 receives notification of content that is available for use in connection with a rich call. In one embodiment, the notification is either a SMS message or, preferably, a WAP Push message that comprises a short textual message from the sender concerning the content together with a URL address that identifies where the content may be downloaded. The URL address may point directly to a standalone Java MIDlet comprising content processed for mobile delivery and use together with a user interface selected based on content type and/or mobile terminal type for use in consuming the content. Alternatively, the URL address may point to a WML page or servlet from which the standalone Java MIDlet may be downloaded.

In step 404, mobile terminal 170 transmits a URL request for the content to HTTP server 138. In one embodiment, this involves the user of mobile terminal 170 clicking on the URL link contained in the WAP message, which automatically launches the mobile terminal 170's WAP browser. In the event that notice of the available content was sent to mobile terminal 170 in an SMS message, the user may manually launch the browser and then enter the URL address. In either case, however, the browser receives the address of the Java MIDlet or the servlet from which the Java MIDlet may be downloaded and creates a URL request. In one embodiment, the URL request includes HTTP parameters that comprise the mobile terminal's type for use by the MCS 130 in dynamically creating the Java MIDlet, as discussed above in detail in connection with FIG. 3B.

Transmission of the request to HTTP server 138 and downloading of the Java MIDlet therefrom may involve the browser using a default access method (e.g., GPRS or GSM data) to connect to WAP gateway 158, and thus, Internet 120. In an alternate embodiment, wherein mobile terminal 170's browser uses HTTP and TCP/IP protocols directly, a direct connection can be made to Internet 120 without having to first route the request to WAP gateway 158 for protocol conversion.

In step 406, mobile terminal 406 downloads the Java MIDlet. In one embodiment, the user of mobile terminal 170 is prompted by the browser to save the Java MIDlet in memory, after which the browser and data connection may be closed and the Java MIDlet executed. In step 408, mobile terminal 170 activates the Java MIDlet either before or during a voice call with the content sender. In step 410, the user of mobile terminal 170 may access, use and/or view the content using the Java MIDlet during the voice call with the content sender.

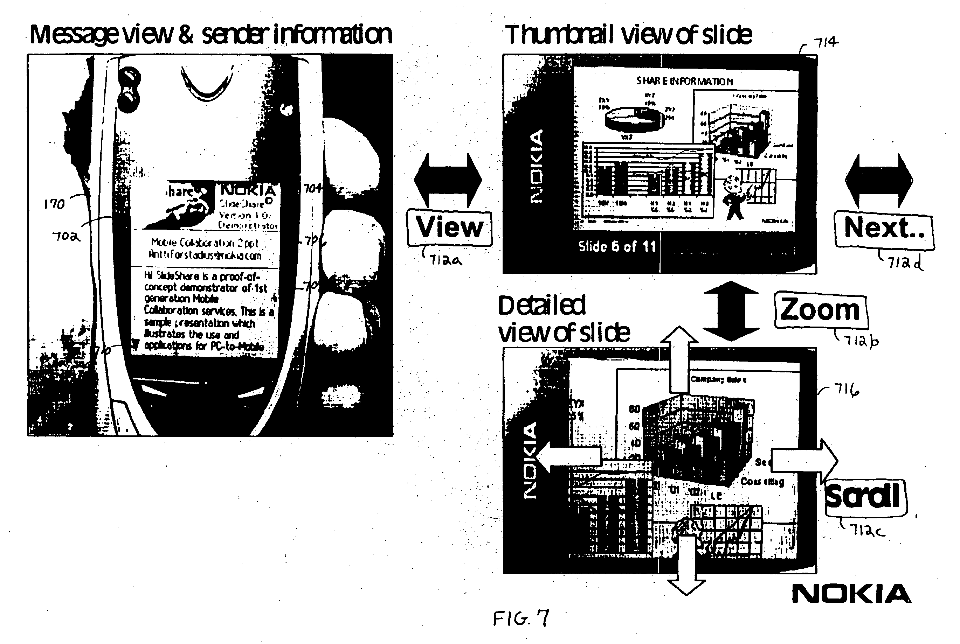

FIG. 7 is a block diagram illustrating one example of content and a user interface presented to a recipient of a Java MIDlet in accordance with one embodiment of the present invention. There is shown in FIG. 7 a recipient's mobile terminal 170 including a display 702. In this example, the recipient has downloaded an activated a Java MIDlet called Slideshare©, which is directed to using PowerPoint slides on a mobile terminal. Upon activation of the MIDlet, there is shown on display 702, a general information page containing information about the MIDlet such as the name 704 of the MIDlet, the content or PowerPoint file embedded in the MIDlet together with information concerning the content sender 706 and a text message 708 relating to the MIDlet typed by the content sender. Display 702 also includes a down arrow 710, which, when selected by the recipient scrolls through the remainder of the text message and may also present various functional keys for using the embedded content or PowerPoint file.

One such functional key is a "View" button 712a, which, when selected presents a thumbnail view 714 of the first slide of the PowerPoint presentation. Selecting the "View" button 712a from a thumbnail view of a slide returns the recipient to the General Information page. When viewing a thumbnail view of a slide, the recipient may press a "Zoom" button 712b to view the slide in greater detail. The recipient may then use arrow keys 712C to scroll the slide in the display window if the slide is not displayed in its entirety in the window. The user may also select a "Next" button 712d to display the next slide in the sequence of slides comprising the PowerPoint Presentation. In contrast, a "Back" button (not shown) may be used to display the previous slide in the sequence. It will be understood that additional functionality not explicitly shown in FIG. 7 may be included in the user interface of the Java MIDlet, and thus, be made available for selection by the recipient.

The many features and advantages of the present invention are apparent from the detailed specification, and thus, it is intended by the appended claims to cover all such features and advantages of the invention which fall within the true spirit and scope of the invention.

Furthermore, since numerous modifications and variations will readily occur to those skilled in the art, it is not desired that the present invention be limited to the exact construction and operation illustrated and described herein, and accordingly, all suitable modifications and equivalents which may be resorted to are intended to fall within the scope of the claims.

## Claims

1. A method for enabling a content sender to share content with users of mobile terminals during a call, comprising:
receiving, from a sending terminal, content and an identifier of a mobile terminal to which the content is to be made available;
selecting, based on a type of the content, a user interface to enable consumption of the content; and
making the content together with the user interface available to the mobile terminal.

2. The method of claim 1 wherein the content and the user interface are made available as a staridalone Java MIDlet comprising the content and the user interface.

3. The method of claim 2 wherein the user interface is a precompiled Java application or a Java source code template.

4. The method of claim 1 wherein the sending terminal is a desktop personal computer.

5. The method of claim 1 wherein the content and identifier are received via one of e-mail or a web interface.

6. The method of claim 1 wherein the mobile terminal is a mobile telephone.

7. The method of claim 6 wherein the identifier is a mobile telephone number.

8. The method of claim 1 wherein consumption of the content comprises one or more of accessing, viewing and using the content.

9. The method of claim 1 further comprising:
receiving an identifier of a plurality of mobile terminals; and
making the content and the user interface available to the plurality of mobile terminals.

10. The method of claim 1 further comprising:
processing the content for consumption by mobile terminals wherein the processing includes one or both of modifying the content for mobile delivery and modifying the content for consumption by a specific type of mobile terminal.

11. The method of claim 1 further comprising:
selecting the user interface based on a type of the mobile terminal.

12. The method of claim 1 further comprising:
storing the content and the user interface;
defining a URL address for downloading the content together with the user interface by the mobile terminal; and
notifying a user of the mobile terminal that the content is available.

13. The method of claim 12 wherein the URL address corresponds to either the content and the user interface or a wireless markup language (WML) webpage or servlet that provides access to the content and the user interface.

14. The method of claim 12 wherein notifying the user comprises:
sending the mobile terminal one of either a SMS message or a WAP message with the URL address.

15. The method of claim 12 further comprising:
receiving a request for the content from the mobile terminal, wherein the request comprises the URL address; and
downloading the content together with the user interface to the mobile terminal.

16. The method of claim 1 further comprising:
notifying the content sender that the content has been downloaded to the mobile terminal.

17. The method of claim 1, further comprising:
selecting, based on a type of the mobile terminal, a user interface to enable consumption of the content.

18. The method of claim 17 further comprising:
prior to selecting and making available,
notifying the mobile terminal of the content; and
receiving a request for the content from the mobile terminal, wherein the request comprises a mobile terminal type.

19. The method of claim 18 further comprising:
selecting a user interface based on the mobile terminal type in the request.

20. The method of claim 17 wherein the user interface and the content are made available as a standalone Java MIDlet comprising the user interface and the content.

21. The method of claim 17 wherein the steps of receiving, selecting and making available are performed by functionality residing within the sending terminal.

22. The method of claim 1 further comprising the mobile terminal:
receiving a notification of content that may be downloaded;
requesting the content;
downloading the content together with a user interface, wherein the user interface has been selected based on a type of the content; and
using the downloaded interface to enable a user to consume the content while on a call with the content sender.

23. A terminal for enabling content to be shared between a user of the terminal and a content sender during a call, comprising:
a memory device for storing a program; and
a processor in communication with the memory device, the processor operative with the program to:
receive a notification of content that may be downloaded;
request the content;
download the content together with a user interface, wherein the user interface has been selected based on a type of the content; and
use the downloaded interface to enable a user to consume the content while on a call with the content sender.

24. The terminal of claim 23, wherein the processor downloads the content and the user interface from a standalone Java MIDlet comprising the content and the user interface.

25. The terminal of claim 23, wherein the processor downloads the content together with a user interface, wherein the user interface has been selected based on a type of the terminal.

26. The method of claim 1 further comprising the mobile terminal:
downloading content together with a user interface, wherein the user interface has been selected based on a type of the content;
displaying information concerning the content;
receiving a request to view the content; and
in response to the request, displaying the content.

27. The method of claim 26 wherein the information concerning the content displayed on the mobile terminal comprises at least one of a name of a Java MIDlet, a name of the content, an identification of a sender of the content and a text message concerning the Java MIDlet.

28. The method of claim 26 wherein the content displayed on the mobile terminal comprises presentation slides and the user interface permits a user of the mobile terminal to perform at least one of browsing thumbnail images of the slides, zooming in to view a slide in greater detail and scrolling a slide in a window if the slide is not displayed in its entirety in the window.

29. A mobile collaboration server, comprising:
a memory device for storing a program; and
a processor in communication with the memory device, the processor operative with the program to:
maintain a first data base of user interfaces, wherein each user interface is for use on a mobile terminal in consuming content of at least one type;
receive content of a first content type from a content sender for delivery to a recipient's mobile terminal;
scan the first data base for, and select, a user interface that is for use in consuming content of the first content type; and
make the content and the selected user interface available for downloading by the recipient.

30. The server of claim 29 wherein the content and the user interface are made available as a Java MIDlet.

31. The server of claim 29 wherein each of the user interfaces is for use on a mobile terminal of at least one type and the processor is further operative with the program to:
if there are a plurality of user interfaces in the first data base that are for use in consuming content of the first type, select one of the plurality of user interfaces that is for use by a mobile terminal of a type that corresponds to the recipient's mobile terminal.

32. The server of claim 29 wherein the processor is further operative with the program to:
maintain a second data base of content processing methods, wherein each method is for use in processing content of at least one type;
scan the second data base for, and select, a content processing method that is for use in processing content of the first type; and
process the received content using the selected content processing method.

33. The server of claim 29 wherein each of the content processing methods is for use in processing content for use on a mobile terminal of at least one type and the processor is further operative with the program to:
if there are a plurality of content processing methods in the second data base that are for use in processing content of the first type, select one of the plurality of content processing methods that processes content for use by a mobile terminal of a type that corresponds to the recipient's mobile terminal.
